# EUROPEAN PATENT APPLICATION

(11) **EP 3 828 780 A1**
(43) Date of publication of application: **02.06.2021**
(21) Application number: 19212374.3
(22) Date of filing: 29.11.2019
(51) Int. Cl.: G06N 3/08, G05D 1/00, G06N 3/04

(54) **TRAINING AN ARTIFICIAL INTELLIGENCE UNIT FOR AN AUTOMATED VEHICLE**

(71) Applicant: Bayerische Motoren Werke Aktiengesellschaft, 80809 München (DE)
(72) Inventor: Heiden, Tessa, van der, 80333 München (DE); Weiss, Christian, 93480 Hohenwarth (DE); Nagaraja, Naveen Shankar, 80993 Munich (DE)

(57) **Abstract**

One aspect of the invention describes a system for training an artificial intelligence unit for an automated vehicle, with said artificial intelligence unit comprising a knowledge configuration, with said artificial intelligence unit determining an evaluation value for at least two motion actions for the automated vehicle considering an input state and considering the knowledge configuration, said input state characterizing the automated vehicle and/or its environment, and said system configured to select one motion action from the set of motion actions, considering the evaluation value of the respective motion actions, train the artificial intelligence unit by adapting the knowledge configuration of the artificial intelligence unit considering the selected motion action, and said knowledge configuration characterizing at least the empowerment of the automated vehicle.

## Description

This invention relates to a system and a method for training an artificial intelligence unit for an automated vehicle.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.
Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.
Level 2 ("hands off'): The automated system takes full control of the vehicle (accelerating, braking, and steering). The driver must monitor the driving and be prepared to intervene immediately at any time if the automated system fails to respond properly. The shorthand "hands off' is not meant to be taken literally. In fact, contact between hand and wheel is often mandatory during SAE 2 driving, to confirm that the driver is ready to intervene.
Level 3 ("eyes off'): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.
Level 4 ("mind off'): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.
Level 5 ("steering wheel optional"): No human intervention is required at all. An example would be a robotic taxi.

Automated vehicles may use various techniques for motion planung, e.g. using artificial intelligence

The purpose of the invention is to learn an automated vehicle to safely navigate to its goal in a socially compliant manner.

One aspect of the invention is a system for training an artificial intelligence unit for an automated vehicle. An automated vehicle is for example a mobile robot that is capable of locomotion or a car or a truck.

One example for the artificial intelligence unit is a reinforcement learning unit.

Basic reinforcement is modeled as a Markov decision process:
- a set of environment and agent states;
- a set of actions, of the agent;
- probabilities of transition from one state to another state,
- a reward after transition from one state to another by a specific action, and
- rules that describe what the agent observes.

Rules are often stochastic. The observation typically involves the scalar, immediate reward associated with the last transition. In many works, the agent is assumed to observe the current environmental state (full observability). If not, the agent has partial observability. Sometimes the set of actions available to the agent is restricted (a zero balance cannot be reduced).

A reinforcement learning agent interacts with its environment in discrete time steps. At each time step, the agent receives an observation, which typically includes the reward. It then chooses an action from the set of available actions, which is subsequently sent to the environment. The environment moves to a new state and the reward associated with the transition is determined. The goal of a reinforcement learning agent is to collect as much reward as possible. The agent can (possibly randomly) choose any action as a function of the history.

Another example for the artificial intelligence unit is a Q-learning unit.

Q-learning is a reinforcement learning technique. The goal of Q-Learning is to learn a policy, which tells an agent what action to take under what circumstances. It does not require a model of the environment and can handle problems with stochastic transitions and rewards, without requiring adaptations.

For any finite Markov decision process, Q-learning finds a policy that is optimal in the sense that it maximizes the expected value of the total reward over all successive steps, starting from the current state. Q-learning can identify an optimal action-selection policy for any given finite Markov decision process, given infinite exploration time and a partly-random policy. "Q" names the function that returns the reward used to provide the reinforcement and can be said to stand for the "quality" of an action taken in a given state.

Another example for the artificial intelligence unit is a Deep Q-learning unit.

Deep Q-learning uses a deep convolutional neural network, with layers of tiled convolutional filters to mimic the effects of receptive fields, wherein convolutional neural networks are a class of feed-forward artificial neural networks. Reinforcement learning is unstable or divergent when a nonlinear function approximator such as a neural network is used to represent Q. This instability comes from the correlations present in the sequence of observations, the fact that small updates to Q may significantly change the policy and the data distribution, and the correlations between Q and the target values.

Said artificial neural networks are computing systems vaguely inspired by the biological neural networks that constitute animal brains. Such systems "learn" to perform tasks by considering examples, generally without being programmed with any task-specific rules. For example, in image recognition, they might learn to identify images that contain cats by analyzing example images that have been manually labeled as "cat" or "no cat" and using the results to identify cats in other images. They do this without any prior knowledge about cats, e.g., that they have fur, tails, whiskers and cat-like faces. Instead, they automatically generate identifying characteristics from the learning material that they process.

An artificial neural network is based on a collection of connected units or nodes called artificial neurons which loosely model the neurons in a biological brain. Each connection, like the synapses in a biological brain, can transmit a signal from one artificial neuron to another. An artificial neuron that receives a signal can process it and then signal additional artificial neurons connected to it.

In common artificial neural network implementations, the signal at a connection between artificial neurons is a real number, and the output of each artificial neuron is computed by some non-linear function of the sum of its inputs. The connections between artificial neurons are called "synapses". Artificial neurons and synapses typically have a weight that adjusts as learning proceeds. The weight increases or decreases the strength of the signal at a connection. Artificial neurons may have a threshold such that the signal is only sent if the aggregate signal crosses that threshold. Typically, artificial neurons are aggregated into layers. Different layers may perform different kinds of transformations on their inputs. Signals travel from the first layer (the input layer), to the last layer (the output layer), possibly after traversing the layers multiple times.

The original goal of the artificial neural network approach was to solve problems in the same way that a human brain would. However, over time, attention moved to performing specific tasks, leading to deviations from biology. Artificial neural networks have been used on a variety of tasks, including computer vision, speech recognition, machine translation, social network filtering, playing board and video games and medical diagnosis.

Said artificial intelligence unit comprises a knowledge configuration, for example a Q-table (if said artificial intelligence unit is a Q-learning unit) or synaptic weights (if said artificial intelligence unit is a Deep Q-learning unit).

Said artificial intelligence unit determines an evaluation value for at least two motion actions for the automated vehicle considering an input state and considering the knowledge configuration, said input state characterizing the automated vehicle and/or its environment.

The at least two motion actions are in particular motion actions regarding longitudinal and/or lateral motion of the automated vehicle, for example acceleration, deceleration, turn left, turn right, switch lane to the left, stay in lane, or switch lane to the right.

Moreover, said system is configured to select one motion action from the set of motion actions, considering the evaluation value of the respective motion actions, and to train the artificial intelligence unit by adapting the knowledge configuration of the artificial intelligence unit considering the selected motion action.

The invention is characterized in that said knowledge configuration characterizes at least the empowerment of the automated vehicle.

Empowerment is an information-theoretic quantity that captures how much an agent is in control of the world it can perceive. It is formalized by the information-theoretic channel capacity between the agent's actuations during a given time interval and the effects on its sensory perception at a time following this interval.

Empowerment was introduced to provide agents with a generic, a prioristic intrinsic motivation that might act as a stepping stone toward more complex behavior. An information-theoretic measure, it quantifies how much potential causal influence an agent has on the world it can perceive.

Informally, this means that an agent chooses its actions in a way that enables him to reach as many future states as possible.

In a preferred embodiment of the invention, the empowerment of the automated vehicle is at least characterized by a number of possible future motion actions of the automated vehicle.

In particular, said system is configured to determine the number of possible future motions actions of the automated vehicle for the at least two motion actions for the automated vehicle and stores this information in the knowledge configuration, so that said system takes this information into account when it selects one motion action from the set of motion actions.

In another preferred embodiment said knowledge configuration characterizes also a reward with the respect to the automated vehicle reaching a goal. The advantage of this preferred embodiment is, that apart from increasing its empowerment, the automated vehicle is also able move towards a specific goal. This goal is for example a location that the automated vehicle is programmed or tasked to reach.

In another preferred embodiment said knowledge configuration characterizes also a distance between the automated vehicle an other road user, which helps to avoid collisions with the other road user.

In another preferred embodiment said artificial intelligence unit determines an evaluation value for at least two motion actions for the automated vehicle such that the first motion action is determined a higher evaluation value than a second motion action, if the first motion action provides the automated vehicle a higher number of possible future motion actions than the second motion action. This preferred embodiment takes into account that the number of possible future motion actions is a specific case of the empowerment of the automated vehicle.

In another preferred embodiment said artificial intelligence unit determines an evaluation value for at least two motion actions for the automated vehicle such that the a first motion action is determined a higher evaluation value than a second motion action, if a future state of the environment of the automated vehicle is more predictable for the first motion action than for the second motion action.

A future state is for the first motion action is for example more predictable than for the second motion action if the conditional probability of occurrence of a first state given the first motion is higher than the conditional probability of occurrence of a second state given the second motion action.

In another preferred embodiment with said artificial intelligence unit determines an evaluation value for at least two motion actions for the automated vehicle such that the a first motion action is determined a higher evaluation value than a second motion action, if the probability of occurrence of a future state of an environment of the automated vehicle is higher if the automated vehicle would perform the first motion action than the probability of occurrence of a future state of an environment of the automated vehicle if the automated vehicle would perform the second motion action.

In another preferred embodiment said artificial intelligence unit predicts a future state of an environment of the automated vehicle for each of the motion actions for the automated vehicle, with said artificial intelligence unit determining two probabilities of occurrence for each of the future states of the environment of the automated vehicle, where the first probability of occurrence is a conditional probability given the occurring of the respective motion action, where the second probability is independent of the occurring of the respective motion action, with said artificial intelligence unit determining an evaluation value for at least two motion actions for the automated vehicle such that the a first motion action is determined a higher evaluation value than a second motion action, if the difference of the two probabilities for the first motion action is higher than the difference of the two probabilities for the second motion action.

In another preferred embodiment the artificial intelligence unit is a reinforcement learning unit.

Another aspect of the invention is a method for training an artificial intelligence unit for an automated vehicle, with said artificial intelligence unit comprising a knowledge configuration, with said artificial intelligence unit determining or reading out an evaluation value for at least two motion actions for the automated vehicle considering an input state and considering the knowledge configuration, said input state characterizing the automated vehicle and/or its environment, the method comprising the steps of selecting one motion action from the set of motion actions, considering the evaluation value of the respective motion actions, and training the artificial intelligence unit by adapting the knowledge configuration of the artificial intelligence unit considering the selected motion action, and characterized in that said knowledge configuration characterizing at least the empowerment of the automated vehicle.

For a better understanding of the present invention, and to show how the same may be carried into effect, reference will now be made, by way of example, to the accompanying drawing, in which:
- Fig. 1: shows an exemplified traffic situation,
- Fig. 2: shows the basic principle of reinforcement learning,
- Fig. 3: shows an exemplified structure of the system for training the artificial intelligence unit, and
- Fig. 4: shows an example for the knowledge configuration of the artificial intelligence unit.

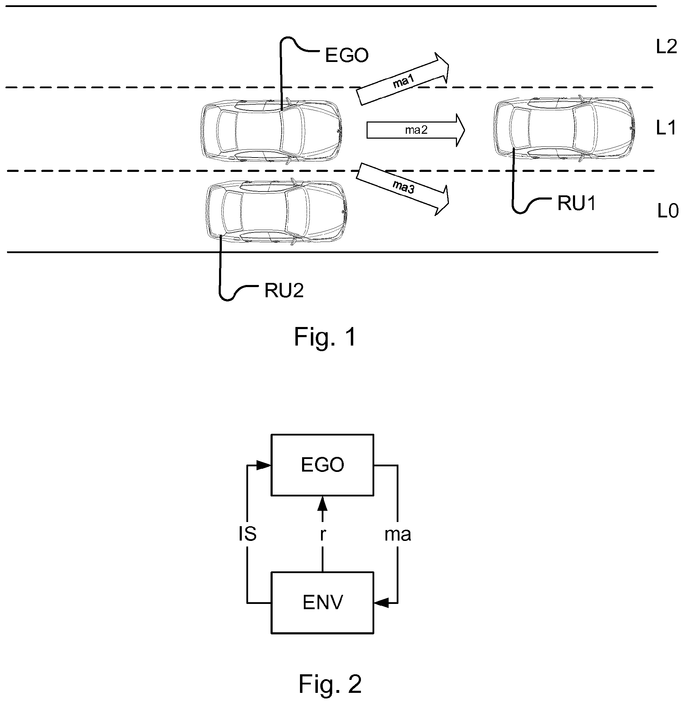

Fig. 1 show an exemplified traffic situation on a road that comprises three lanes L0, L1, L2. The automated vehicle EGO is driving on the middle lane L1, one road user RU1 is also driving on the middle lane L1 but in front of the automated vehicle EGO, and another road user RU2 is driving on the right lane L0.

The automated vehicle EGO has three motion actions ma1, ma2, ma3 available, wherein one motion action ma1 is a lane change to the left lane L2, one motion action ma2 is staying in the current lane L1 and one motion action ma3 is a lane change to the right lane L0.

Depending on the chosen motion action ma1, ma2, ma3 and the speed of the automated vehicle EGO and the other road users RU1, R2, the automated vehicle EGO will experience different levels of empowerment.

For example at the current time step, the automated vehicle EGO can perform three different motions actions ma1, ma2, ma3, because it is driving on the middle lane L1. However, after a lane change to one of the outside lanes L0, L2, the automated vehicle EGO will have at most two motion actions available.

Fig. 2 shows the basic principle of reinforcement learning. The automated vehicle EGO is selecting and executing a motion action ma, which influences the environment ENV of the automated vehicle. The automated vehicle EGO receives an input state IS characterizing the automated vehicle EGO and/or its environment ENV and a reward r for the transition from one state to another state.

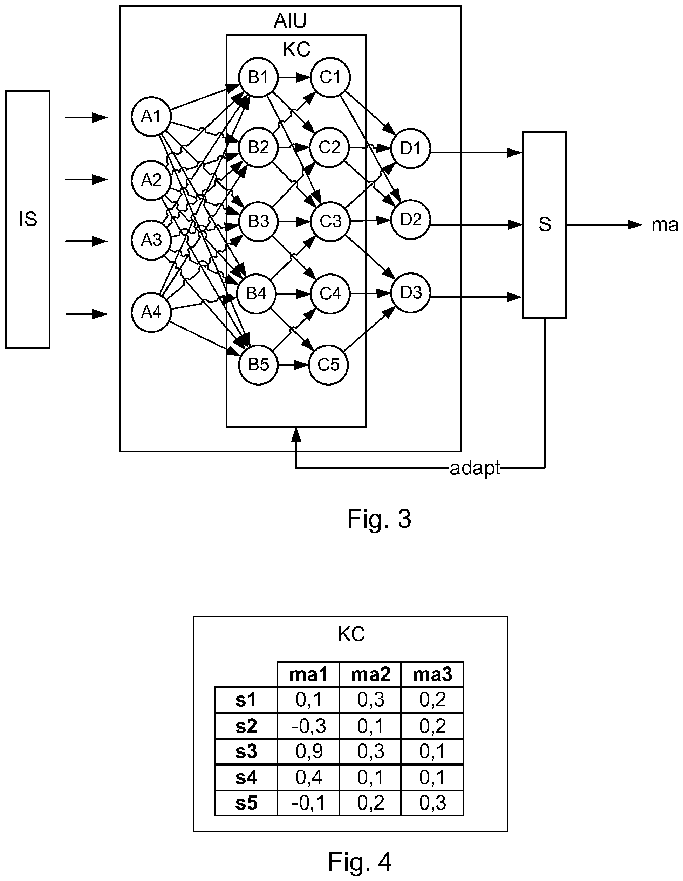

Fig. 3 shows an exemplified structure of the system for training the artificial intelligence unit AIU for an automated vehicle EGO.

Said artificial intelligence unit AIU comprises a knowledge configuration KC, and said artificial intelligence unit AIU determines an evaluation value for at least two motion actions ma1, ma2, ma3 for the automated vehicle EGO considering an input state IS, s1 - s5 and considering the knowledge configuration KC, wherein said input state IS, s1 - s5 characterizes the automated vehicle EGO and/or its environment ENV.

Moreover, said system is configured to select one motion action ma from the at least two motion actions ma1, ma2, ma3, considering the evaluation value of the respective motion actions ma1, ma2, ma3.

Said system comprises for example a selection unit S for selecting one motion action ma from the at least two motion actions ma1, ma2, ma3, considering the evaluation value of the respective motion actions ma1, ma2, ma3.

Additionally, said system is configured to train the artificial intelligence unit AIU by adapting the knowledge configuration KC of the artificial intelligence unit AIU considering the selected motion action ma.

In particular, the artificial intelligence unit AIU is a neural network. Said neural network AIU comprises a plurality of neurons A1 - A4; B1 - B5; C1 - C5; D1 - D3 interconnected via a plurality of synapses. A first set of neurons A1 - A4 is receiving information about the input state IS, s1 - s5, and a second set of neurons B1 - B5; C1 - C5 is approximating at least two evaluation functions considering the input state IS, s1 - s5. A third set of neurons D1 - D3 is assigning the at least two evaluation functions to the at least two motion actions ma1, ma2, ma3 of the automated vehicle.

The knowledge configuration KC of the artificial intelligence unit AIU is the synaptic weight of the at least one synapse of the second set of synapses.

Fig. 4 shows an example for the knowledge configuration KC of the artificial intelligence unit AIU.

In this example, for each of the input states IS, s1 - s5, a reward r for every motion action ma1, ma2, ma3 for the automated vehicle EGO is defined in the knowledge configuration KC, which is represented as a table.

Said artificial intelligence unit AIU reads out the reward r as an evaluation value for at least two motion actions ma1, ma2, ma3 for the automated vehicle EGO considering the input state IS, s1 - s5 from the knowledge configuration KC. Said input state IS, s1 - s5 characterizes the automated vehicle EGO and/or its environment ENV.

Moreover, said system is configured to select one motion action ma from the at least two motion actions ma1, ma2, ma3, considering the evaluation value of the respective motion actions ma1, ma2, ma3. For example, the motion action ma with the highest reward r may be selected. In this example, the selected motion action ma is motion action ma3, because it has the highest reward r of the at least two motion actions ma1, ma2, ma3 considering the current input state s2.

Additionally, said system is configured to train the artificial intelligence unit AIU by adapting the knowledge configuration KC of the artificial intelligence unit AIU considering the selected motion action ma.

In particular, the adaption of the knowledge configuration KC of the artificial intelligence unit AIU considering the selected motion action ma may be performed by determination of the following input state IS, s1 - s5, in particular the following input state s4. The reward r for the selected motion action ma, ma3 and the current input state s2 may be adapted, for example, by considering the reward r of the one motion action of the at least two motion actions ma1, ma2, ma3, which has the highest reward regarding the following input state s4. In this example, the motion action ma1 has the highest reward r of the at least two motion actions ma1, ma2, ma3 considering the following input state s4.

For example, the reward r for the selected motion action ma, ma3 and the current input state s2 may be set to a weighted sum of the old value of the reward r for the selected motion action ma, ma3 and the of the reward r for the motion action ma1 with the highest reward r of the at least two motion actions ma1, ma2, ma3 considering the following input state s4. The weights of the weighted sum specifies a learning rate or step size, which determines to what extent newly acquired information overrides old information. A factor of 0 makes the artificial intelligence unit AIU learn nothing (exclusively exploiting prior knowledge), while a factor of 1 makes the artificial intelligence unit AIU consider only the most recent information (ignoring prior knowledge to explore possibilities).

Said knowledge configuration KC characterizes at least the empowerment of the automated vehicle EGO. Moreover, said knowledge configuration KC characterizes in particular also a reward with the respect to the automated vehicle EGO reaching a goal. The reward r may for example be the sum of a first value that characterizes the empowerment of the automated vehicle EGO and of second value that characterizes the automated vehicle EGO reaching a goal.

Said artificial intelligence unit AIU in particular determines this first value such that a first motion action is determined a higher first value than a second motion action, if the first motion action provides the automated vehicle EGO a higher number of possible future motion actions than the second motion action.

Alternatively, said artificial intelligence unit AIU in particular determines this reward r for at least two motion actions ma1, ma2, ma3 for the automated vehicle EGO such that the a reward r for a first motion action is determined a higher first value than a reward r for a second motion action, if a future state of the environment of the automated vehicle EGO is more predictable for the first motion action than for the second motion action.

## Claims

1. A system for training an artificial intelligence unit (AIU) for an automated vehicle (EGO), with said artificial intelligence unit (AIU) comprising a knowledge configuration (KC), with said artificial intelligence unit (AIU) determining an evaluation value for at least two motion actions (ma1, ma2, ma3) for the automated vehicle (EGO) considering an input state (IS, s1 - s5) and considering the knowledge configuration (KC), said input state (IS, s1 - s5) characterizing the automated vehicle (EGO) and/or its environment (ENV), and said system configured to:
• select one motion action (ma) from the set of motion actions, (ma1, ma2, ma3), considering the evaluation value of the respective motion actions (ma1, ma2, ma3),
• train the artificial intelligence unit (AIU) by adapting the knowledge configuration (KC) of the artificial intelligence unit (AIU) considering the selected motion action (ma), and **characterized in that**
• said knowledge configuration (KC) characterizing at least the empowerment of the automated vehicle (EGO).

2. A system according to claim 1, wherein the empowerment of the automated vehicle (EGO) is at least **characterized by** a number of possible future motion actions of the automated vehicle (EGO).

3. A system according any of the previous claims, said knowledge configuration (KC) characterizing also a reward with the respect to the automated vehicle (EGO) reaching a goal.

4. A system according to any of the previous claims, said knowledge configuration (KC) characterizing also a distance between the automated vehicle (EGO) an other road user (RU1, RU2).

5. A system according to any of the previous claims, with said artificial intelligence unit (AIU) determining an evaluation value for at least two motion actions (ma1, ma2, ma3) for the automated vehicle (EGO) such that the first motion action is determined a higher evaluation value than a second motion action, if the first motion action provides the automated vehicle (EGO) a higher number of possible future motion actions than the second motion action.

6. A system according to any of the previous claims, with said artificial intelligence unit (AIU) determining an evaluation value for at least two motion actions (ma1, ma2, ma3) for the automated vehicle (EGO) such that the a first motion action is determined a higher evaluation value than a second motion action, if a future state of the environment of the automated vehicle (EGO) is more predictable for the first motion action than for the second motion action.

7. A system according to any of the previous claims, with said artificial intelligence unit (AIU) determining an evaluation value for at least two motion actions (ma1, ma2, ma3) for the automated vehicle (EGO) such that the a first motion action is determined a higher evaluation value than a second motion action, if the probability of occurrence of a future state of an environment of the automated vehicle (EGO) is higher if the automated vehicle (EGO) would perform the first motion action than the probability of occurrence of a future state of an environment of the automated vehicle (EGO) if the automated vehicle (EGO) would perform the second motion action.

8. A system according to any of the previous claims, with said artificial intelligence unit (AIU) predicting a future state of an environment of the automated vehicle (EGO) for each of the motion actions (ma1, ma2, ma3) for the automated vehicle (EGO), with said artificial intelligence unit (AIU) determining two probabilities of occurrence for each of the future states of the environment of the automated vehicle (EGO), where the first probability of occurrence is a conditional probability given the occurring of the respective motion action, where the second probability is independent of the occurring of the respective motion action, with said artificial intelligence unit (AIU) determining an evaluation value for at least two motion actions (ma1, ma2, ma3) for the automated vehicle (EGO) such that the a first motion action is determined a higher evaluation value than a second motion action, if the difference of the two probabilities for the first motion action is higher than the difference of the two probabilities for the second motion action.

9. A system according to any of the previous claims wherein the artificial intelligence unit (AIU) is a reinforcement learning unit.

10. A method for training an artificial intelligence unit (AIU) for an
automated vehicle (EGO), with said artificial intelligence unit (AIU) comprising a knowledge configuration (KC), with said artificial intelligence unit (AIU) determining or reading out an evaluation value for at least two motion actions (ma1, ma2, ma3) for the automated vehicle (EGO) considering an input state (IS, s1 - s5) and considering the knowledge configuration (KC), said input state (IS, s1 - s5) characterizing the automated vehicle (EGO) and/or its environment, the method comprising the steps of:
• selecting one motion action (ma) from the set of motion actions (ma1, ma2, ma3), considering the evaluation value of the respective motion actions (ma1, ma2, ma3), and
• training the artificial intelligence unit (AIU) by adapting the knowledge configuration (KC) of the artificial intelligence unit (AIU) considering the selected motion action (ma), and
**characterized in that**
• said knowledge configuration (KC) characterizing at least the empowerment of the automated vehicle (EGO).
